# EUROPEAN PATENT SPECIFICATION

(11) **EP 2 894 606 B1**
(45) Date of publication and mention of the grant of the patent: **08.03.2017**
(21) Application number: 14198298.3
(22) Date of filing: 16.12.2014
(51) Int. Cl.: G06T 11/60

(54) **Electronic system for generating logos and/or images.**
Elektronisches System zur Erzeugung von Logos und/oder Bildern
Système électronique permettant de produire des logos et/ou des images.

(30) Priority: 18.12.2013 EP 13005916
(43) Date of publication of application: 15.07.2015
(73) Proprietor: Comitato Urban Center Bologna, 40124 Bologna (IT)
(72) Inventor: Bartoli, Matteo, 34124 TRIESTE (IT); Pastore, Michele, 34127 TRIESTE (IT)
(74) Representative: Zermani, Umberto

(56) References cited:
- US-A1- 2006 129 417

## Description

This invention relates to an electronic system for generating logos and/or images.

The invention is applicable in particular to the field of *marketing* and *brand naming*, in particular for the study and production of logos for commercial and/or entrepreneurial and/or institutional activities.

Due to the fact image and branding have assumed an ever greater importance within commercial activities over recent years, there has been a significant rise in the number of firms which specifically deal with the creation of logos and brands tailored to the clientele.

However, it is immediately apparent that employing professionals dedicated to the performance of these activities is often onerous, both in terms of time and costs, thus preventing small enterprises or private firms from accessing this type of consultancy.

Disadvantageously, therefore, the creation of new logos or brands is currently linked to the employment of professionals in the trade, the more skilled they are the more costly they are, or on the creativity of individuals, which, however, is often linked to improvisation and rarely the result of prudent and rational choices.

Patent application US 2006/0129417 A1 (WILLIAMS, WILLIAMS, CARROLL, NOVAK) 15 JUNE 2006 (2006-06-15) discloses a method and a system for interactively designing a logo. The user can select from among the desired characteristics like image, type of industry, etc. The user selects a symbol from a group of symbols of a database of symbols and interactively change the characteristics, like shape, color, position, etc.

In light of the above mentioned, the aim of this invention is to provide an electronic system for generating logos and/or images which overcomes the above-mentioned drawbacks of the prior art.

More specifically, the aim of this invention is to provide an electronic system for generating logos and/or images easily, inexpensively and accessible to all.

These aims are achieved by an electronic system for generating logos and/or images according to one or more of the appended claims.

Further features and advantages of this invention are more apparent in the detailed description below, with reference to a preferred, non-restricting, embodiment of an electronic system for generating logos and/or images as illustrated in the accompanying drawings, in which:

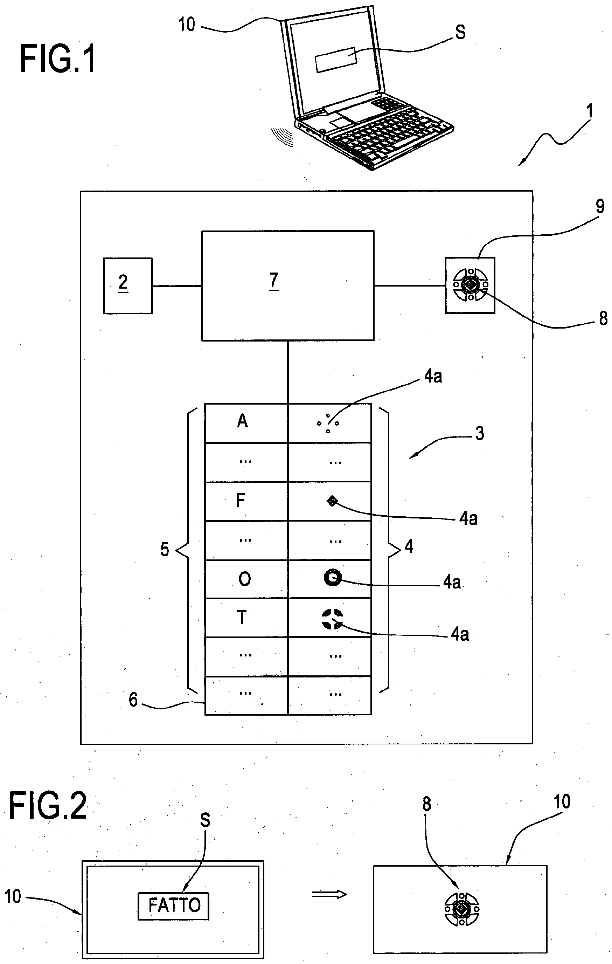

- Figure 1 schematically illustrates an electronic system for generating logos and/or images according to this invention;
- Figure 2 illustrates two successive steps in the operation of the electronic system for generating logos and/or images of Figure 1;

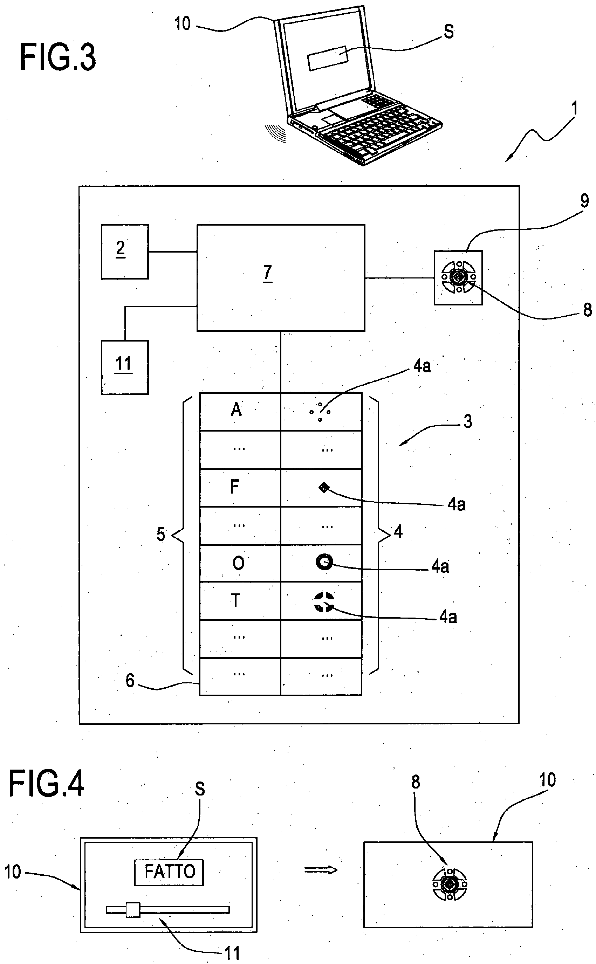

- Figure 3 schematically illustrates a second embodiment of an electronic system for generating logos and/or images according to this invention;
- Figure 4 illustrates two successive steps in the operation of the electronic system for generating logos and/or images of Figure 3.

With reference to the accompanying drawings, the numeral 1 denotes an electronic system for generating logos and/or images according to this invention.

The system comprises a user interface module 2 designed to allow the insertion of a combination of alphanumeric characters by a user.

The user interface module 2 is preferably configured to display to a user a data insertion module which can be viewed by a user using (the screen of) an electronic device (*Personal Computer, Notebook, Tablet PC, Smartphone* or the like) and associated with a writing panel to receive a plurality of inputs correlated with the above-mentioned combination of alphanumeric characters.

In other words, the user interface module 2 can be operatively associated with a remote electronic device 10 and is configured for allowing the remote device 10 to actively enter the alphanumeric combination. Consequently, the interface module 2 is preferably a *software* application, but alternatively could also be a *hardware* component which can be associated with the electronic device.

Preferably, the data insertion module is provided with at least one writable string "S" in which the user can (using the above-mentioned writing panel) insert the desired alphanumeric combination.

It should be noted that the expression "alphanumeric combination" in this text means a single word comprising letters of the alphabet and, possibly, numbers.

In light of this, it should be noted that the user interface module 2 is designed for allowing the insertion of at least one alphanumeric combination (that is, a word), but in some embodiments also a plurality of alphanumeric combinations (that is to say, a plurality of words).

The system also comprises a memory 3 containing a plurality of graphical symbols 4 each having a predetermined central point 4a.

The memory 3 also contains a plurality of alphanumeric characters 5.

The alphanumeric characters 5 correspond to those which can be inserted by the user in the interface module 2 (using the data insertion module).

Preferably, the above-mentioned alphanumeric characters 5 are defined by the letters of the alphabet from A to the Z and are at least 21.

More preferably, there are 26 alphanumeric characters 5, corresponding to the 26 letters of the English alphabet (including J, K, W, X and Y).

It should be noted that the memory 3 also contains a database 6 designed to correlate each alphanumeric character 5 to at least one graphical symbol 4 (contained in the memory 3).

In the preferred embodiment, the memory 3 comprises a number of graphical symbols 4 corresponding to the number of alphanumeric characters 5 which can be inserted by the user.

In other words, the database 6 is configured for correlating each letter of the alphabet to a (single) corresponding graphical symbol 4, different from the others.

Thus, the memory 3 preferably comprises a number of graphical symbols 4 between 21 and 26 (according to the number of alphanumeric characters used).

It should be noted that, preferably, the graphical symbols 4 are divided into at least four groups, wherein all the graphical symbols of a single group are correlated with each other by a same geometrical pattern.

More specifically, a first group comprises a plurality of graphical symbols 4 of a substantially circular shape; a second group comprises a plurality of graphical symbols 4 in the form of a cross (or of its vertices); a third group comprises a plurality of graphical symbols 4 substantially rhomboid or quadrangular in shape; a fourth group comprises a plurality of graphical symbols 4 substantially polygonal in shape (preferably hexagonal).

Moreover, the database 6 is programmed to attribute each letter to a predetermined group as a function of an attribution criterion correlated with the frequency with which the letter appears in the dictionaries of the operating language of the system (preferably Italian).

In other words, the most frequent letters are distributed amongst the different groups in such a way that the logos do not have a marked redundancy of a predetermined geometrical pattern.

For example, considering that the letters with the highest frequency in words in the Italian language are A, I and O, the letter A is preferably inserted in the second group, the letter I is preferably inserted in the third group and the letter O is preferably inserted in the first group.

According to this invention, the system 1 is also provided with a processor 7 associated with the interface module 2 for receiving the alphanumeric combination inserted by the user, configured for picking up from the memory 3 the graphical symbols 4 corresponding to the alphanumeric characters 5 of the alphanumeric combination inserted and programmed to combine together the graphical symbols 4 to obtain a logo and/or an image 8 corresponding to the alphanumeric combination.

Preferably, the processor 7 is programmed for superposing the graphical symbols 4 of the combination at the central point 4a.

Advantageously, in this way it is simple and fast to create a logo or image 8 correlated with the word (or alphanumeric combination) used.

In fact, since all the graphical symbols 4 have a predetermined central point 4a, the system according to this invention allows a logo to be generated for all the words (or alphanumeric combinations) which can be inserted.

Preferably, in order to optimise this technical effect, all the graphical symbols 4 have a geometry with a central symmetry relative to the central point 4a.

Advantageously, in this way, whatever the alphanumeric combination inserted by the user, the processor 7 prepares a logo or image 8 which is regular and with an attractive appearance.

Preferably, the processing module 7 is programmed to generate as many logos 8 as there are alphanumeric combinations inserted by the user in the interface module 2, that is to say, using the insertion module.

Advantageously, thanks to this, each sentence or set of words has a respective series of logos which can define a symbol or trademark.

Preferably, also, the interface 2 comprises a module for selecting the colour 11 configured to allow a user to modify the colour of the individual graphical symbol 4 and/or of the logo and/or image 8.

Preferably, the module for selecting the colour is defined by a cursor slidable along a band, wherein each point on the band is associated with a colour.

The processor 7 is configured to detect the position of the cursor on the band and impart to the logo and/or image 8 the correlated colour.

Preferably, the module for selecting the colour has at least two portions which can be selected in order to allow the selection of at least two distinct colours.

For this reason, preferably, the module for selecting the colour has two bands each equipped with a respective cursor.

The processor is configured for detecting the position of both and imparting to the logo 8 (or to the individual graphical symbols 4) a combination of colours correlated to them.

Preferably, also, the module for selecting the colour comprises at least one unit for selecting the transparency.

In this regard, the processor 7 is associated with the unit for selecting the transparency and configured to modify the colour (that is, the contrast) of the logo and/or image 8 as a function of a signal sent by the unit for selecting the transparency.

Lastly, the system 1 is also equipped with at least one display module 9 associated with the processor 7 and configured for providing the user with a graphical representation of the logo and/or image 8.

The display module 9 may be defined by *in situ* display screen (that is, be a *hardware* component) or be connected to the processor 7, which can be operatively associated with a remote electronic device 10 and configured for allowing the remote device 10 to display the logo and/or image 8 to the user (that is, be a *software* application).

Preferably, therefore, the system 1 is defined by a web application on HTML5, CSS3, Javascript, PHP, SVG and other server-side script technologies in such a way as to be accessible remotely, also using the 3G or 4G network, using electronic devices commonly known on the market.

The invention achieves the preset aims and brings important advantages.

In effect, the presence of a system which is able to generate with ease logos and images as a function of a word entered by the user (such as, for example, the respective name or the name of the relative activities) makes it possible to obtain or at least provide a basic concept for creating a trademark without the need to engage professionals in the trade, but, in any case, guaranteeing the achievement of a symbol which is regular in shape and attractive.

More specifically, the use of graphical symbols with a central symmetry makes it possible to obtain a logo or image with neat graphics for any alphanumeric combination entered by the user, that is to say, without the need to provide preset combinations which would limit the freedom in designing the logo.

## Claims

1. An electronic system for generating logos and/or images, **characterised in that** it comprises:
- a user interface module (2) designed to allow the insertion of a combination of alphanumeric characters by a user;
- a memory (3) containing
a plurality of graphical symbols (4) each having a predetermined central point (4a),
a plurality of alphanumeric characters (5), and
a database (6) designed to correlate each alphanumeric character (5) to at least one graphical symbol (4) contained in the memory (3);
- a processor (7) associated with the interface module (2) for receiving the alphanumeric combination inserted by the user, configured for picking up from the memory (3) the graphical symbols (4) corresponding to the alphanumeric characters (5) of the combination and programmed to combine together the graphical symbols (4) superposing them at the central point (4a) to obtain a logo and/or an image (8) corresponding to the alphanumeric combination;
- at least one display module (9) associated with the processor (7) and configured for providing the user with a graphical representation of the logo and/or image (8).

2. The system according to claim 1, **characterised in that** the graphical symbols (4) have a geometry with a central symmetry relative to the central point (4a).

3. The system according to claim 1 or 2, **characterised in that** the memory (3) comprises a number of graphical symbols (4) between 21 and 26; the database (6) being configured for correlating each letter of the alphabet to a corresponding graphical symbol (4), different from the others.

4. The system according to any one of the preceding claims, **characterised in that** the graphical symbols (4) are divided into at least four groups, wherein all the graphical symbols (4) are correlated with each other by a same geometrical pattern; the database (6) being programmed to attribute each letter to a predetermined group as a function of an attribution criterion correlated with the frequency with which the letter appears in the dictionaries of the operating language of the system.

5. The system according to any one of the preceding claims, **characterised in that** the interface (2) comprises a module for selecting the colour configured to allow a user to modify the colour of the individual graphical symbol (4) and/or of the logo and/or image (8).

6. The system according to claim 5, **characterised in that** the module for selecting the colour (11) has at least two portions which can be selected in order to allow the selection of at least two distinct colours.

7. The system according to claim 5 or 6, **characterised in that** the module for selecting the colour comprises at least one unit for selecting the transparency; the processor (7) being associated with the unit for selecting the transparency and configured to modify the colour of the logo and/or image (8) as a function of a signal sent by the unit for selecting the transparency.

8. The system according to any one of the preceding claims, **characterised in that** the interface module (2) can be operatively associated with a remote electronic device (10) and is configured for allowing the remote device (10) to actively enter the alphanumeric combination.

9. The system according to any one of the preceding claims, **characterised in that** the display module (9) can be operatively associated with a remote electronic device (10) and is configured for allowing the remote device (10) to display the logo and/or image (8) to the user.

## Patentansprüche

1. Elektronisches System zum Erzeugen von Logos und/oder Bildern, **dadurch gekennzeichnet, dass** es umfasst:
- ein Benutzer-Schnittstellemodul (2), ausgelegt, um die Eingabe einer Kombination von alphanumerischen Zeichen durch einen Benutzer zu erlauben;
- einen Speicher (3) enthaltend
eine Mehrheit von graphischen Zeichen (4), von denen jedes einen vorbestimmten Mittelpunkt (4a) hat, eine Mehrheit von alphanumerischen Zeichen (5), und eine Datenbank (6), ausgelegt, um jedes alphanumerische Zeichen (5) mit mindestens einem im Speicher (3) enthaltenen graphischen Zeichen (4) zu korrelieren;
- einen Prozessor (7) assoziiert mit dem Schnittstellemodul (2), um die vom Benutzer eingegebene alphanumerische Kombination zu empfangen, ausgelegt, um aus dem Speicher (3) die den alphanumerischen Zeichen (5) der Kombination entsprechenden graphischen Zeichen (4) aufzunehmen und programmiert, um die graphischen Zeichen (4) zusammen zu kombinieren, indem sie im Mittelpunkt (4a) übereinandergelegt werden, um ein der alphanumerischen Kombination entsprechendes Logo und/oder Bild (8) zu erhalten;
- mindestens ein Displaymodul (9), assoziiert mit dem Prozessor (7) und konfiguriert, um den Benutzer mit einer graphischen Darstellung des Logos und/oder Bildes (8) zu versorgen.

2. System nach Anspruch 1, **dadurch gekennzeichnet, dass** die graphischen Symbole (4) eine Geometrie mit einer mittleren Symmetrie relativ zum Mittelpunkt (4a) haben.

3. System nach Anspruch 1 oder 2, **dadurch gekennzeichnet, dass** der Speicher (3) eine Anzahl graphischer Symbole (4) zwischen 21 und 26 umfasst; die Datenbank (6) ist konfiguriert, um jeden Buchstaben des Alphabets mit einem entsprechenden, von den anderen unterschiedlichen graphischen Zeichen (4), zu korrelieren.

4. System nach einem der vorangehenden Ansprüche, **dadurch gekennzeichnet, dass** die graphischen Symbole (4) aufgeteilt sind in mindestens vier Gruppen, wobei alle graphischen Zeichen (4) miteinander anhand eines gleichen geometrischen Musters korreliert sind; die Datenbank (6) ist programmiert, um jeden Buchstaben einer vorbestimmten Gruppe zuzuordnen, als eine Funktion eines Zuordnungskriteriums korreliert mit der Häufigkeit, mit der der Buchstabe in den Wörterbüchern der Betriebssprache des Systems vorkommt.

5. System nach einem der vorangehenden Ansprüche, **dadurch gekennzeichnet, dass** die Schnittstelle (2) ein Modul umfasst, um die konfigurierte Farbe auszuwählen, um einem Benutzer zu erlauben, die Farbe des individuellen graphischen Symbols (4) und/oder des Logos und/oder des Bildes (8) zu ändern.

6. System nach Anspruch 5, **dadurch gekennzeichnet, dass** das Modul zum Auswählen der Farbe (11) mindestens zwei Teile hat, die gewählt werden können, um die Auswahl von mindestens zwei verschiedenen Farben zu erlauben.

7. System nach Anspruch 5 oder 6, **dadurch gekennzeichnet, dass** das Modul zum Auswählen der Farbe mindestens eine Einheit für die Auswahl der Transparenz umfasst; der Prozessor (7) ist assoziiert mit der Einheit zum Auswählen der Transparenz und konfiguriert, um die Farbe des Logos und/oder des Bildes (8) zu modifizieren, als eine Funktion eines von der Einheit zum Auswählen der Transparenz gesendeten Signals.

8. System nach einem der vorangehenden Ansprüche, **dadurch gekennzeichnet, dass** das Schnittstellenmodul (2) betriebswirksam mit einem Remote-Elektronikgerät (10) assoziiert werden kann und konfiguriert ist, so dass das Ferngerät (10) die alphanumerische Kombination aktiv eingeben kann.

9. System nach einem der vorangehenden Ansprüche, **dadurch gekennzeichnet, dass** das Displaymodul (9) betriebswirksam mit einem Remote-Elektronikgerät (10) assoziiert werden kann und konfiguriert ist, so dass das Ferngerät (10) das Logo und/oder das Bild (8) dem Benutzer anzeigen kann.

## Revendications

1. Système électronique permettant de produire des logos et/ou des images, **caractérisé**
**en ce qu'**il comprend :
- un module d'interface utilisateur (2) conçu pour permettre l'insertion d'une combinaison de caractères alphanumériques par un utilisateur ;
- une mémoire (3) contenant
une pluralité de symboles graphiques (4) comportant chacun un point central prédéfini (4a),
une pluralité de caractères alphanumériques (5), et
une base de données (6) conçue pour corréler chaque caractère alphanumérique (5) à au moins un symbole graphique (4) contenu dans la mémoire (3) ;
- un processeur (7), associé au module d'interface (2) pour recevoir la combinaison alphanumérique insérée par l'utilisateur, configuré pour récupérer de la mémoire (3) les symboles graphiques (4) correspondant aux caractères alphanumériques (5) de la combinaison et programmé pour combiner ensemble les symboles graphiques (4) en les superposant au niveau du point central (4a) pour obtenir un logo et/ou une image (8) correspondant à la combinaison alphanumérique ;
- au moins un module d'affichage (9) associé au processeur (7) et configuré pour fournir à l'utilisateur une représentation graphique du logo et/ou de l'image (8).

2. Système selon la revendication 1, **caractérisé en ce que** les symboles graphiques (4) comportent une géométrie à symétrie centrale par rapport au point central (4a) .

3. Système selon la revendication 1 ou 2, **caractérisé en ce que** la mémoire (3) comprend un nombre de symboles graphiques (4) compris entre 21 et 26 ; la base de données (6) étant configurée pour corréler chaque lettre de l'alphabet à un symbole graphique (4) correspondant, différent des autres.

4. Système selon l'une quelconque des revendications précédentes, **caractérisé en ce que** les symboles graphiques (4) sont divisés en au moins quatre groupes, dans lequel tous les symboles graphiques (4) sont corrélés les uns avec les autres à un même motif géométrique ; la base de données (6) étant programmée pour attribuer chaque lettre à un groupe prédéfini en fonction d'un critère d'attribution corrélé à la fréquence avec laquelle la lettre apparait dans les dictionnaires de la langue d'usage du système.

5. Système selon l'une quelconque des revendications précédentes, **caractérisé en ce que** l'interface (2) comprend un module pour sélectionner la couleur configurée pour permettre à l'utilisateur de modifier la couleur de chaque symbole graphique (4) et/ou du logo et/ou de l'image (8).

6. Système selon la revendication 5, **caractérisé en ce que** le module servant à sélectionner la couleur (11) comporte au moins deux parties pouvant être sélectionnées afin de permettre la sélection d'au moins deux couleurs différentes.

7. Système selon la revendication 5 ou 6, **caractérisé en ce que** le module servant à sélectionner la couleur comprend au moins une unité destinée à sélectionner la transparence ; le processeur (7) étant associé à l'unité pour sélectionner la transparence et configuré pour modifier la couleur du logo et/ou de l'image (8) en fonction d'un signal envoyé par l'unité pour sélectionner la transparence.

8. Système selon l'une quelconque des revendications précédentes, **caractérisé en ce que** le module d'interface (2) peut être fonctionnellement associé à un dispositif électronique à distance (10) et est configuré pour permettre au dispositif à distance (10) d'entrer activement la combinaison alphanumérique.

9. Système selon l'une quelconque des revendications précédentes, **caractérisé en ce que** le module d'affichage (9) peut être fonctionnellement associé à un dispositif électronique à distance (10) et est configuré pour permettre au dispositif à distance (10) d'afficher le logo et/ou l'image (8) à l'utilisateur.
